(19) Europäisches Patentamt / European Patent Office / Office européen des brevets

(11) **EP 3 719 913 A1**

(12) **EUROPEAN PATENT APPLICATION**
published in accordance with Art. 153(4) EPC

(43) Date of publication:
**07.10.2020 Bulletin 2020/41**

(51) Int Cl.:
*H01M 10/0585* (2010.01)   *H01M 4/38* (2006.01)
*H01M 4/48* (2010.01)   *H01M 10/052* (2010.01)
*H01M 10/0569* (2010.01)

(21) Application number: **18883942.7**

(22) Date of filing: **15.11.2018**

(86) International application number:
**PCT/JP2018/042202**

(87) International publication number:
**WO 2019/107158 (06.06.2019 Gazette 2019/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2017 JP 2017230619**

(71) Applicants:
• **Panasonic Corporation**
  **Kadoma-shi, Osaka 571-8501 (JP)**
• **Sanyo Electric Co., Ltd.**
  **Daito-shi, Osaka 574-8534 (JP)**

(72) Inventors:
• **WATANABE, Hiroki**
  **Osaka-shi**
  **Osaka 540-6207 (JP)**
• **MIYACHI, Yoshikazu**
  **Osaka-shi**
  **Osaka 540-6207 (JP)**
• **UEHARA, Yukitoshi**
  **Osaka-shi**
  **Osaka 540-6207 (JP)**
• **MIYAZAKI, Shinya**
  **Osaka-shi**
  **Osaka 540-6207 (JP)**

(74) Representative: **Vigand, Philippe et al**
**Novagraaf International SA**
**Chemin de l'Echo 3**
**1213 Onex - Genève (CH)**

(54) **NON-AQUEOUS ELECTROLYTE SECONDARY BATTERY**

(57)    A non-aqueous electrolyte secondary battery includes an electrode body in which a plurality of positive electrodes and a plurality of negative electrodes are alternately stacked with a separator interposed therebetween, and a non-aqueous electrolytic solution containing a non-aqueous solvent. The electrode body has 8 or more layers of pairs of a positive electrode and a negative electrode. The non-aqueous electrolytic solution contains, at 25°C, 10 to 40% by volume of a fluoroethylene carbonate and 15 to 40% by volume of a chain carboxylate ester having 5 or less carbon atoms, relative to the total volume of the non-aqueous solvent.

Figure 2

**Description**

Technical Field

The present disclosure relates to a non-aqueous electrolyte secondary battery.

Background Art

PTL 1 discloses a non-aqueous electrolyte secondary battery in which a fluoroethylene carbonate (FEC) is added to an electrolytic solution in order to suppress precipitation of lithium metal on a surface of a negative electrode. When lithium is precipitated, cycle characteristics tend to be deteriorated, and heat generation at the time of occurrence of abnormalities tends to be increased. Therefore, it is an important challenge to prevent precipitation of lithium. Furthermore, PTL 2 discloses a coin-shaped non-aqueous electrolyte secondary battery containing, as components of an electrolytic solution, a specific carboxylate ester and a specific fluorinated cyclic carbonate in order to achieve a high capacity and excellent cycle characteristics. PTL 3 also discloses coin-shaped and cylindrical non-aqueous electrolyte secondary batteries, each containing, as components of an electrolytic solution, a fluorinated cyclic carbonate, a carboxylate ester, and a non-halogenated carbonate in order to achieve a high capacity, excellent cycle characteristics, and excellent high-temperature storage characteristics.

Citation List

Patent Literature

PTL 1: Japanese Published Unexamined Patent Application No. 2013-218967
PTL 2: Japanese Published Unexamined Patent Application No. 2008-41366
PTL 3: Japanese Published Unexamined Patent Application (Translation of PCT Application) No. 2017-530500

Summary of Invention

As described above, the addition of an FEC is known to be effective in suppressing precipitation of lithium. However, in a non-aqueous electrolyte secondary battery provided with a multilayer electrode body in which a plurality of positive electrodes and a plurality of negative electrodes are alternately stacked with a separator interposed therebetween, precipitation of lithium is likely to be caused by lifting of the end portions of the electrodes or electric field concentration on the end portions of the electrodes. Thus, a sufficient effect cannot be obtained even when an electrolytic solution having the FEC added thereto is used. Furthermore, in a non-aqueous electrolyte secondary battery, it is an important challenge to suppress ignition at the time of occurrence of abnormalities, such as leakage.
It is an object of the present disclosure to suppress precipitation of lithium while minimizing flammability in a non-aqueous electrolyte secondary battery provided with a multilayer electrode body.
A non-aqueous electrolyte secondary battery according to an aspect of the present disclosure includes an electrode body in which a plurality of positive electrodes and a plurality of negative electrodes are alternately stacked with a separator interposed therebetween, and a non-aqueous electrolytic solution containing a non-aqueous solvent, in which the electrode body has 8 or more layers of pairs of the positive electrode and the negative electrode, and the non-aqueous electrolytic solution contains, at 25°C, 10 to 40% by volume of a fluoroethylene carbonate and 15 to 40% by volume of a chain carboxylate ester having 5 or less carbon atoms, relative to the total volume of the non-aqueous solvent.
According to the aspect of the present disclosure, in a non-aqueous electrolyte secondary battery provided with a multilayer electrode body, it is possible to suppress precipitation of lithium while minimizing flammability. Brief Description of Drawings
[Figure 1] Figure 1 is a perspective view of a non-aqueous electrolyte secondary battery as an example of an embodiment.
[Figure 2] Figure 2 is a cross-sectional view taken along the line A-A in Figure 1.
[Figure 3] Figure 3 is a graph showing the relationship between the flash point of an electrolytic solution and the presence or absence of lithium precipitation in a negative electrode, relative to the contents of FEC and ethyl propionate (EP) in a non-aqueous solvent.

Description of Embodiments

As described above, in a non-aqueous electrolyte secondary battery provided with a multilayer electrode body, for example, lifting of the end portions of the electrodes is likely to occur, and distances between positive and negative electrodes may change at the end portions of the electrodes in some cases. Furthermore, electric field concentration on the end portions of the electrodes is likely to occur. When lifting of the end portions of the electrodes and electric field concentration occur, lithium is likely to be precipitated on the surfaces of negative electrodes, and there is a concern that the cycle characteristics of the battery may be deteriorated, and heat generation at the time of occurrence of abnormalities may be increased.

The present inventors have performed thorough studies in order to solve such problems. As a result, by using an electrolytic solution containing 10 to 40% by volume of an FEC and 15 to 40% by volume of a chain carboxylate ester having 5 or less carbon atoms relative to the total volume of a non-aqueous solvent, the present inventors have succeeded in suppressing precipitation of lithium while minimizing flammability in a non-aqueous electrolyte secondary battery provided with a multilayer electrode body having 8 or more layers of pairs of a positive electrode and a negative electrode. Such an effect cannot be obtained only by addition of an FEC, but can be specifically obtained only in the case where an FEC and a chain carboxylate ester having 5 or less carbon atoms are mixed at a specific ratio.

Precipitation of lithium is more likely to occur when a negative electrode active material that undergoes a large change in volume during charging and discharging (e.g., a Si-containing oxide which will be described later) is used. The non-aqueous electrolyte secondary battery according to the present disclosure can be effective even in such a case. Furthermore, the non-aqueous electrolyte secondary battery is also effective for a negative electrode plate that is filled with a negative electrode active material at a high density, such as a filling density of 1.4 $g/cm^3$ or more and 1.7 $g/cm^3$ or less.

An example of an embodiment of the present disclosure will be described in details below with reference to the drawings. The drawings referred to in the description of the embodiment are schematically illustrated, and the dimensional ratios of constituent elements and the like depicted in the drawings may be different from actuals. Specific dimensional ratios and the like should be judged in consideration of the following description.

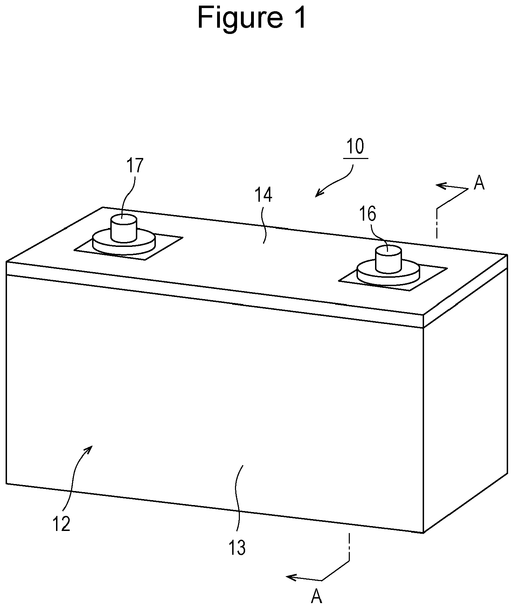

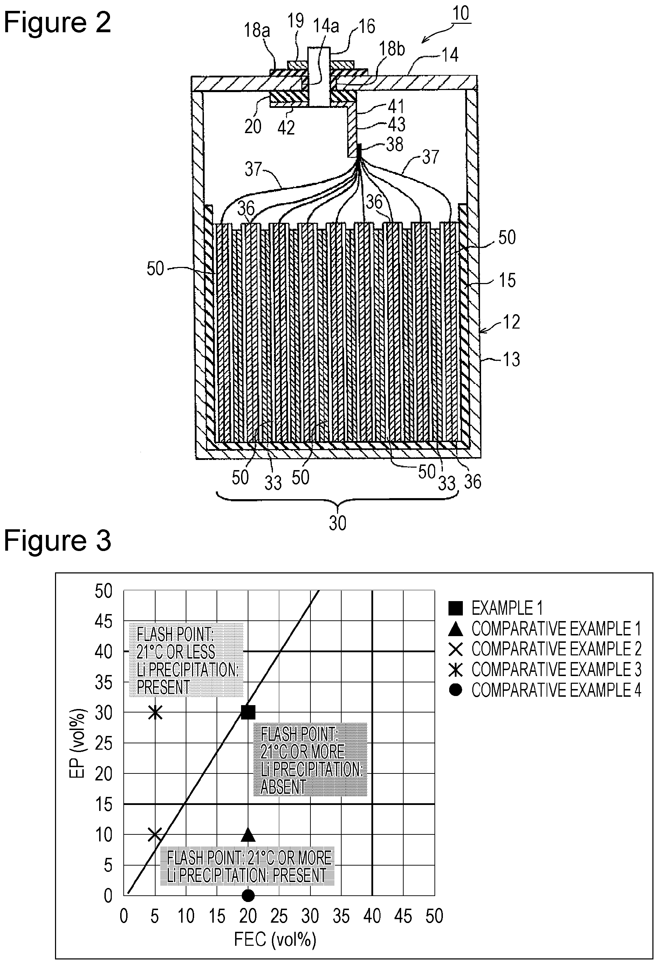

Figure 1 is a perspective view showing an external appearance of a non-aqueous electrolyte secondary battery 10 as an example of the embodiment, and Figure 2 is a cross-sectional view taken along the line A-A in Figure 1. In this description, the long direction of the page of Figure 1 is defined as the "upward/downward direction", a direction in which positive electrodes 33 and negative electrodes 36 are stacked in an electrode body 30, which will be described later, is defined as the "stacking direction", and a direction orthogonal to each of the upward/downward direction and the stacking direction is defined as the "longitudinal direction". Furthermore, in this description, the term "end portion" means an end and its vicinity of an object. Figure 2 shows a terminal connection structure on the negative electrode side. In this embodiment, a terminal connection structure on the positive electrode side has the same configuration as that on the negative electrode side.

As illustrated in Figures 1 and 2, the non-aqueous electrolyte secondary battery 10 includes a battery case 12 as an outer case. The battery case 12 holds inside an electrode body 30 serving as a power generation element and a non-aqueous electrolytic solution (not shown). The electrode body 30 has a structure in which a plurality of positive electrodes 33 and a plurality of negative electrodes 36 are alternately stacked with a separator 50 interposed therebetween. The battery case 12 includes a case main body 13, which is a closed-bottom tubular container with an opening, and a lid plate 14 covering an upper end opening of the case main body 13, and has a substantially rectangular parallelepiped shape. For example, the case main body 13 and the lid plate 14 are each formed of a metal containing, as a main component, aluminum, and the case main body 13 and the lid plate 14 are joined to each other by welding or the like. The non-aqueous electrolyte secondary battery 10 including such a battery case 12 is generally referred to as a prismatic battery.

A negative electrode terminal 16 is provided on one end portion in the longitudinal direction of the top face of the battery case 12 (lid plate 14), and a positive electrode terminal 17 is provided on the other end portion in the longitudinal direction. The negative electrode terminal 16 has a function of electrically connecting an external element to the negative electrodes 36, and the positive electrode terminal 17 has a function of electrically connecting an external element to the positive electrodes 33. Although not shown, the lid plate 14 is provided with an injection hole for injecting an electrolytic solution, a sealing plug for sealing the injection hole, a gas discharge valve for discharging gas inside the battery to the outside of the battery, and the like.

As illustrated in Figure 2, the electrode body 30 is received in the battery case 12 with its side faces and bottom face being covered with an insulative holder 15. In this way, the battery case 12 is insulated from the positive electrodes 33 and the negative electrodes 36. The holder 15 is, for example, formed of a resin or the like and extends along the inner walls of the battery case 12. Preferably, a rectangular parallelepiped box-shaped holder with an open top end or a bag-shaped holder with an open top end may be used.

A through-hole 14a for inserting the negative electrode terminal 16 is formed in one end portion of the lid plate 14 provided on the upper side of the battery case 12. The negative electrode terminal 16 is fixed on the lid plate 14 by an upper joining member 19 in a state of being inserted in the through-hole 14a of the lid plate 14. Intermediate members 18a and 18b are, for example, gaskets made of resin. Furthermore, the lower end portion of the negative electrode terminal 16 is electrically connected to an upper end plate portion 42 of a negative electrode connecting portion 41, and an insulating member 20 is arranged between the upper end plate portion 42 and the lid plate 14. Accordingly, the negative electrode terminal 16 and the lid plate 14 are insulated from each other by the insulative intermediate members 18a and 18b arranged between the upper joining member 19 and the lid plate 14 and the insulating member 20 arranged between the negative electrode connecting portion 41 and the lid plate 14.

The negative electrode connecting portion 41 is formed of a metal plate and has a U-shaped cross section, including the upper end plate portion 42 that is substantially parallel to the lid plate 14 of the battery case 12 and a lower side plate portion 43 that continuously bends from the upper end plate portion 42, the lower side plate portion 43 and the upper end plate portion 42 being at substantially right angles to each other. A multilayer negative electrode tab body 38 formed by gathering together negative electrode tabs 37, which will be described later, is joined by welding or the like to the lower side plate portion 43 of the negative electrode connecting portion 41. In this way, the negative electrodes 36 are electrically connected to the negative electrode terminal 16.

The electrode body 30 includes a plurality of tabular positive electrodes 33, a plurality of tabular negative electrodes 36, and a plurality of separators 50. Although a separator 50 may be formed by folding a long porous resin sheet into a pleated shape, in this embodiment, a separator 50 is inserted between a positive electrode 33 and a negative electrode 36 that are adjacent to each other. The electrode body 30 is a multilayer electrode body in which the positive electrodes 33 and the negative electrodes 36 are stacked with separators 50 interposed therebetween. Each of the positive electrodes 33, the negative electrodes 36, and the separators 50 has a substantially rectangular shape, and the electrode body 30 in which these are stacked has a substantially rectangular parallelepiped shape. Note that from the viewpoint of lithium acceptability during charging, the negative electrode 36 is a size larger than the positive electrode 33.

A positive electrode 33 includes a positive electrode current collector and a positive electrode mixture layer formed on the current collector. As the positive electrode current collector, a foil of a metal, such as aluminum, that is stable in the potential range of the positive electrode 33, a film in which the metal is disposed as a surface layer, or the like can be used. The positive electrode mixture layer contains a positive electrode active material, a conductive material such as carbon black (CB) or acetylene black (AB), and a binder such as polytetrafluoroethylene (PTFE) or polyvinylidene fluoride (PVdF), and is preferably formed on each of both surfaces of the positive electrode current collector.

The positive electrode 33 is provided with a positive electrode tab which is a part of the positive electrode current collector extending from an end portion in the longitudinal direction of the top edge of the positive electrode current collector. Preferably, an insulating layer or a protective layer having a higher electrical resistance than the positive electrode current collector is provided on a portion where the positive electrode tab is in contact with a tetragonal region in which the positive electrode mixture layer is formed. Note that the positive electrode tab may be a separate member formed of the same material as, or a different material from, that of the positive electrode current collector, and may be joined by welding or the like to the positive electrode current collector.

As the positive electrode active material, preferably, a lithium metal composite oxide is used. The metal element constituting the lithium metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. In particular, the lithium metal composite oxide preferably contains at least one selected from the group consisting of Co, Ni, Mn, and Al. Preferred examples of the lithium metal composite oxide include a lithium metal composite oxide containing Co, Ni, and Mn, and a lithium metal composite oxide containing Co, Ni, and Al.

A negative electrode 36 includes a negative electrode current collector and a negative electrode mixture layer formed on the current collector. As the negative electrode current collector, a foil of a metal, such as copper, that is stable in the potential range of the negative electrode 36, a film in which the metal is disposed as a surface layer, or the like can be used. The negative electrode mixture layer includes a negative electrode active material and a binder, and is preferably formed on each of both surfaces of the negative electrode current collector. In the case where the negative electrode active material has low conductivity, a conductive material may be incorporated into the negative electrode mixture layer. As the binder, as in the positive electrode 33, PTFE, PVdF, or the like can be used, and furthermore, styrene-butadiene rubber (SBR), carboxymethyl cellulose (CMC) or a salt thereof, polyacrylic acid (PAA) or a salt thereof, polyvinyl alcohol (PVA), or the like may be used.

The negative electrode 36 is provided with a negative electrode tab 37 which is a part of the negative electrode current collector extending from an end portion in the longitudinal direction of the top edge of the negative electrode current collector, the end portion in the longitudinal direction being different from the end portion on which the positive electrode tab is provided. Note that the negative electrode tab 37 may be a separate member formed of the same material as, or a different material from, that of the negative electrode current collector, and may be joined by welding or the like to the negative electrode current collector.

The negative electrode active material is not particularly limited as long as it can reversibly occlude and release lithium ions. For example, a carbon material, such as natural graphite or artificial graphite, may be used. The negative electrode 36 may contain, as a negative electrode active material, at least one selected from the group consisting of a metal, such as Si or Sn, which forms an alloy with lithium, an alloy containing the metal, and an oxide containing the metal. In particular, a Si-containing oxide is preferable. The negative electrode mixture layer preferably contains, as a negative electrode active material, graphite and a Si-containing oxide. The content of the Si-containing oxide and the like in the negative electrode mixture layer is, for example, 3 to 15% by mass relative to the total mass of the negative electrode active material.

The Si-containing oxide is not particularly limited as long as it is an oxide containing Si, but is preferably an oxide represented by $SiO_x$ ($0.5 \leq x \leq 1.5$). Preferably, a conductive coating formed of a material having higher conductivity than $SiO_x$ is formed on the surface of the $SiO_x$ particle. The average particle size (Dv50) of $SiO_x$ is, for example, 1 $\mu$m to 15 $\mu$m, and is smaller than the Dv50 of graphite particles.

$SiO_x$, for example, has a structure in which Si is dispersed in an amorphous $SiO_2$ matrix. When a cross section of the $SiO_x$ particle is observed using a transmission electron microscope (TEM), the presence of dispersed Si can be confirmed. $SiO_x$ may contain, in its particle, lithium silicate (e.g., lithium silicate represented by $Li_{2z}SiO_{(2+z)}$ ($0 < z < 2$)), or may have a structure in which Si is dispersed in a lithium silicate phase.

A carbon coating is suitable as the conductive coating. The carbon coating may be formed in an amount of 0.5 to 10% by mass relative to the mass of the $SiO_x$ particle. Examples of a method for forming the carbon coating include a method in which coal tar or the like is mixed with $SiO_x$ particles, followed by heat treatment, and a chemical vapor deposition method using hydrocarbon gas or the like. Furthermore, the carbon coating may be formed by allowing carbon black, Ketjen black, or the like to adhere to the surfaces of $SiO_x$ particles by use of a binder.

As the separator 50, a porous sheet having ion permeability and an insulating property is used. Specific examples of the porous sheet include a microporous thin film, woven fabric, and non-woven fabric. As the material for the separator 50, an olefin resin such as polyethylene or polypropylene, cellulose, or the like is preferably used. The separator 50 may have either a single-layer structure or a multilayer structure. Furthermore, a porous layer containing an inorganic compound filler, a porous layer formed of a resin having high heat resistance such as an aramid resin, or the like may be formed on the surface of the separator 50.

In this embodiment, the upper end portions of the negative electrode tabs 37 extending upward from the top edges of the negative electrode current collectors are stacked in the stacking direction, thus forming a multilayer negative electrode tab body 38. The multilayer negative electrode tab body 38 is joined by welding or the like to a surface facing in the stacking direction of the lower side plate portion 43 of the negative electrode connecting portion 41. Regarding the positive electrode tabs, similarly, a multilayer positive electrode tab body is joined by welding or the like to a surface facing in the stacking direction of a lower side plate portion of a positive electrode connecting portion.

As shown in Figure 2, since the negative electrode connecting portion 41 to which the negative electrode tabs 37 are connected is provided in the central part in the stacking direction of the battery case 12, at least some of the negative electrode tabs 37 are connected to the negative electrode connecting portion 41 in a largely curved and bent state (the same for the positive electrode tabs). Therefore, in particular, in the upper end portion of the electrode body 30, lifting of the end portions of the electrodes is likely to occur, and precipitation of lithium is likely to occur. In the non-aqueous electrolyte secondary battery 10, even when such a structure is present, precipitation of lithium can be sufficiently suppressed.

The electrode body 30 has 8 or more layers, preferably 10 or more layers, and more preferably 20 or more layers of pairs of the positive electrode 33 and the negative electrode 36. By increasing the number of electrodes stacked, a higher battery capacity can be achieved. The upper limit of the number of electrodes stacked is not particularly limited, but is, for example, 50 layers in consideration of ease of handling of tabs inside the non-aqueous electrolyte secondary battery 10. In the non-aqueous electrolyte secondary battery 10, the effect of suppressing precipitation of lithium is particularly marked in the case where the number of electrodes stacked is 10 layers or more. In this embodiment, as outermost electrodes of the electrode body 30, negative electrodes 36 are arranged. Accordingly, a positive electrode mixture layer formed on each of both surfaces of a positive electrode 33 always faces a negative electrode 36.

When the number of electrodes stacked in one electrode body 30 is increased, as described above, handling of tabs inside the non-aqueous electrolyte secondary battery 30 becomes difficult, and it becomes difficult to increase the energy density per unit volume of the non-aqueous electrolyte secondary battery 10. However, by housing two or more electrode bodies 30 each including an appropriate number of electrodes stacked in a non-aqueous electrolyte secondary battery 10, handling of tabs is facilitated, and the energy density per unit volume of the non-aqueous electrolyte secondary battery 10 can be increased.

In the electrode body 30, preferably, the positive electrodes 33, the negative electrodes 36, and the separators 50 are fixed in a stacked state. For example, fixing may be performed by winding a fixing member, such as an insulating tape, around the electrode body 30, or the stacked state may be fixed by providing bonding layers on each separator 50 so that the separator 50 is bonded to its adjacent positive electrode 33 and the separator 50 is bonded to its adjacent negative electrode 36.

A non-aqueous electrolytic solution will be described below.

The non-aqueous electrolytic solution contains a non-aqueous solvent and an electrolyte salt dissolved in the non-aqueous solvent. The non-aqueous electrolytic solution contains 10 to 40% by volume of a fluoroethylene carbonate (FEC) and 15 to 40% by volume of a chain carboxylate ester having 5 or less carbon atoms, relative to the total volume of the non-aqueous solvent at 25°C. By using the non-aqueous electrolytic solution, precipitation of lithium can be specifically suppressed while minimizing flammability at the time of battery leakage. Note that, in the range not impairing such an effect, a non-aqueous solvent other than the FEC and the chain carboxylate ester may also be used.

Examples of the FEC include 4-fluoroethylene carbonate (monofluoroethylene carbonate), 4,5-difluoroethylene carbonate, 4,4-difluoroethylene carbonate, 4,4,5-trifluoroethylene carbonate, 4,4,5,5-tetrafluoroethylene carbonate, and the like. Among these, 4-fluoroethylene carbonate is particularly preferable. The content of the FEC is preferably 10 to 40% by volume relative to the total volume of the non-aqueous solvent. When the content of the FEC is less than 10% by volume, the effect of suppressing precipitation of lithium cannot be obtained. On the other hand, when the content of the FEC is more than 40% by volume, the viscosity of the non-aqueous electrolytic solution increases excessively, resulting in a significant deterioration in charge-discharge characteristics.

Examples of the chain carboxylate ester having 5 or less carbon atoms include methyl acetate, ethyl acetate, propyl acetate, methyl propionate (MP), ethyl propionate (EP), and the like. Note that even when a chain carboxylate ester having more than 5 carbon atoms is added, the effect of suppressing precipitation of lithium cannot be obtained. As the chain carboxylate ester having 5 or less carbon atoms, two or more chain carboxylate esters may be used. However, preferably, at least EP is used, and more preferably, EP alone is used. The content of the chain carboxylate ester having 5 or less carbon atoms is preferably 15 to 40% by volume relative to the total volume of the non-aqueous solvent. When the content of the chain carboxylate ester is less than 15% by volume, the effect of suppressing precipitation of lithium cannot be obtained. On the other hand, when the content is more than 40% by volume, it becomes difficult to minimize flammability. Figure 3 shows the effective performance range of 4-fluoroethylene carbonate and ethyl propionate, i.e., the range of mixing ratio in which precipitation of lithium on the surfaces of the negative electrodes can be suppressed while minimizing flammability.

Examples of the non-aqueous solvent other than the FEC and the chain carboxylate ester include cyclic carbonates, chain carbonates, cyclic ethers, chain ethers, nitriles such as acetonitrile, amides such as dimethylformamide, and a halogen substitution product in which at least part of hydrogen atoms of any of these compounds is substituted with halogen atoms, such as fluorine. These may be used alone or in combination of two or more.

Examples of the cyclic carbonates include ethylene carbonate (EC), propylene carbonate (PC), butylene carbonate, and the like. Among these, PC is particularly preferable. Examples of the chain carbonates include dimethyl carbonate (DMC), ethyl methyl carbonate (EMC), diethyl carbonate, methyl propyl carbonate, ethyl propyl carbonate, methyl isopropyl carbonate, and the like. Among these, DMC and EMC are particularly preferable.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, crown ether, and the like. Examples of the chain ethers include 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, tetraethylene glycol dimethyl ether, and the like.

Preferably, the non-aqueous solvent contains, in addition to the FEC and the chain carboxylate ester having 5 or less carbon atoms, at least one selected from the group consisting of PC, EMC, and DMC. In this case, while maintaining good charge-discharge characteristics, flammability can be minimized and precipitation of lithium can be suppressed. A preferred example of the non-aqueous solvent is a non-aqueous solvent containing FEC, EP, PC, EMC, and DMC. The total content of FEC and EP is preferably 25 to 80% by volume, more preferably 35 to 60% by volume, relative to the total volume of the non-aqueous solvent. In other words, the non-aqueous electrolytic solution preferably contains at least one selected from the group consisting of PC, EMC, and DMC in an amount of 20 to 75% by volume relative to the total volume of the non-aqueous solvent.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1 < x < 6, n is 1 or 2), $LiB_{10}Cl_{10}$, $LiCl$, $LiBr$, $LiI$, lithium chloroborane, lower aliphatic lithium carboxylates, borates such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ {l and m are integers of 0 or more}. These lithium salts may be used alone or in a mixture of two or more. Among these, from the viewpoint of ionic conductivity, electrochemical stability, and the like, $LiPF_6$ is preferably used. The concentration of the lithium salt is, for example, 0.8 mol to 1.8 mol per liter of the non-aqueous solvent.

EXAMPLES

The present disclosure will be further described below with reference to examples. However, it is to be understood that the present disclosure is not limited the examples.

<Example 1>

[Formation of positive electrode]

As a positive electrode active material, a lithium metal composite oxide represented by $LiNi_{0.55}Mn_{0.20}Co_{0.25}O_2$ was used. The positive electrode active material, acetylene black, and PVdF were mixed at a mass ratio of 100:1:1, and NMP was added to the mixture to prepare a positive electrode mixture slurry. Subsequently, the positive electrode mixture slurry was applied onto both surfaces of a positive electrode current collector formed of an aluminum foil. After the resulting coating films were dried, the coating films (positive electrode mixture layers) were rolled with a roll press machine. Then, cutting was performed to a predetermined electrode size, thereby obtaining a positive electrode having mixture layers on both surfaces of the current collector.

[Formation of negative electrode]

As a negative electrode active material, 96 parts by mass of graphite and 4 parts by mass of $SiO_x$ (x = 0.94) provided with a carbon coating were used. The negative electrode active material, an SBR dispersion, and a sodium salt of CMC were mixed at a mass ratio of 100:1:1, and water was added to the mixture to prepare a negative electrode mixture slurry. Subsequently, the negative electrode mixture slurry was applied onto both surfaces of a negative electrode current collector formed of a copper foil. After the resulting coating films were dried, the coating films (negative electrode mixture layers) were rolled with a roll press machine. Then, cutting was performed to a predetermined electrode size, thereby obtaining a negative electrode having mixture layers on both surfaces of the current collector.

[Preparation of non-aqueous electrolytic solution]

Into a mixed solvent obtained by mixing FEC, PC, EP, EMC, and DMC at a volume ratio of 20:5:30:15:30 at 25°C, $LiPF_6$ was added at a concentration of 1.0 mol/L, and 2% by volume (ratio to solvent) of vinylene carbonate was further added thereto to prepare a non-aqueous electrolytic solution.

[Fabrication of test cell]

Eight positive electrodes and nine negative electrodes, each being described above, were alternately stacked with a separator interposed therebetween, in the order of negative electrode-positive electrode-····-negative electrode, thereby forming a multilayer electrode body. As the separator, a separator made of polypropylene was used. The electrode body was inserted into an outer case formed of an aluminum laminate sheet, the non-aqueous electrolytic solution was injected thereinto, and the opening of the outer case was sealed, thereby fabricating a test cell.

<Comparative Example 1>

A test cell was fabricated as in Example 1, except that, in the preparation of the non-aqueous electrolytic solution, a mixed solvent obtained by mixing FEC, PC, EP, EMC, and DMC at a volume ratio of 20:5:10:35:30 was used.

<Comparative Example 2>

A test cell was fabricated as in Example 1, except that, in the preparation of the non-aqueous electrolytic solution, a mixed solvent obtained by mixing FEC, PC, EP, EMC, and DMC at a volume ratio of 5:20:10:35:30 was used.

<Comparative Example 3>

A test cell was fabricated as in Example 1, except that, in the preparation of the non-aqueous electrolytic solution, a mixed solvent obtained by mixing FEC, PC, EP, EMC, and DMC at a volume ratio of 5:20:30:15:30 was used.

<Comparative Example 4>

A test cell was fabricated as in Example 1, except that, in the preparation of the non-aqueous electrolytic solution, a mixed solvent obtained by mixing FEC, PC, EP, EMC, and DMC at a volume ratio of 20:5:0:45:30 was used.

Each of the test cells of Example and Comparative Examples was subjected to performance evaluations by the methods described below. The evaluation results are shown in Table 1.

[Evaluation of flammability]

A flash point was measured using the tag closed cup method according to JIS K 2265-1.

[Evaluation of charge-discharge efficiency at the time of high-rate charging]

In a temperature environment of 25°C, charging was performed at a constant current of 2C until the cell voltage reached 4.2 V, and after a pause of 10 minutes, discharging was performed at a constant current of 0.2C until the cell voltage reached 2.5 V. The charge capacity X and the discharge capacity Y in this process were obtained, and a charge-discharge efficiency was calculated on the basis of the following formula:

$$\text{Charge-discharge efficiency (\%) = (Y/X)} \times 100$$

[Evaluation of presence or absence of lithium precipitation]

The test cell after the charge-discharge evaluation was disassembled, and the surface of the negative electrode was visually observed to confirm presence or absence of lithium precipitation.

[Table 1]

|  | FEC | EP | Flammability | Charge-discharge efficiency at the time of high-rate charging | Presence or absence of Li precipitation after high-rate charging |
|---|---|---|---|---|---|
|  | vol% | vol% | °C | % | Present/Absent |
| Example 1 | 20 | 30 | 21.6 | 99 | Absent |
| Comparative Example 1 | 20 | 10 | 25.2 | 97 | Present |
| Comparative Example 2 | 5 | 10 | 22.2 | 93 | Present |
| Comparative Example 3 | 5 | 30 | 18.6 | 95 | Present |
| Comparative Example 4 | 20 | 0 | 27.0 | 96 | Present |

As shown in Table 1, in the test cell of Example, flammability is low, and the charge-discharge efficiency at the time of high-rate charging is high compared with the test cells of Comparative Examples. The charge-discharge efficiency at the time of high-rate charging can be an indicator that shows the likelihood of occurrence of lithium precipitation. Actually, in the test cells of Comparative Examples, presence of lithium precipitated on the surface of the negative electrode was confirmed, but in the test cell of Example, precipitation of lithium was not confirmed. Such an effect cannot be obtained in the case where FEC only is added (refer to Comparative Example 4), but can be specifically obtained in the case where FEC and a chain carboxylate ester having 5 or less carbon atoms are mixed at a specific ratio, concretely, only in the range shown in Figure 3.

Reference Signs List

| 10 | non-aqueous electrolyte secondary battery |
|---|---|
| 12 | battery case |
| 13 | case main body |
| 14 | lid plate |
| 14a | through-hole |
| 15 | holder |
| 16 | negative electrode terminal |
| 17 | positive electrode terminal |
| 18a, 18b | intermediate member |
| 19 | upper joining member |
| 20 | insulating member |
| 30 | electrode body |
| 33 | positive electrode |
| 36 | negative electrode |
| 37 | negative electrode tab |
| 38 | multilayer negative electrode tab body |
| 41 | negative electrode connecting portion |
| 42 | upper end plate portion |
| 43 | lower side plate portion |
| 50 | separator |

**Claims**

1. A non-aqueous electrolyte secondary battery comprising:

    an electrode body in which a plurality of positive electrodes and a plurality of negative electrodes are alternately stacked with a separator interposed therebetween; and
    a non-aqueous electrolytic solution containing a non-aqueous solvent,
    wherein the electrode body has 8 or more layers of pairs of the positive electrode and the negative electrode, and the non-aqueous electrolytic solution contains, at 25°C, 10 to 40% by volume of a fluoroethylene carbonate and 15 to 40% by volume of a chain carboxylate ester having 5 or less carbon atoms, relative to the total volume of the non-aqueous solvent.

2. The non-aqueous electrolyte secondary battery according to Claim 1, wherein the negative electrode contains, as a negative electrode active material, at least one selected from the group consisting of a metal which forms an alloy with lithium, an alloy containing the metal, and an oxide containing the metal.

3. The non-aqueous electrolyte secondary battery according to Claim 1 or 2, wherein the chain carboxylate ester is ethyl propionate.

4. The non-aqueous electrolyte secondary battery according to any one of Claims 1 to 3, wherein the non-aqueous solvent further contains at least one selected from the group consisting of ethylene carbonate, ethyl methyl carbonate, and dimethyl carbonate.

# Figure 1

## Figure 2

## Figure 3

## INTERNATIONAL SEARCH REPORT

| | International application No. |
|---|---|
| | PCT/JP2018/042202 |

A. CLASSIFICATION OF SUBJECT MATTER
Int.Cl.  H01M10/0585(2010.01)i, H01M4/38(2006.01)i, H01M4/48(2010.01)i,
         H01M10/052(2010.01)i, H01M10/0569(2010.01)i

According to International Patent Classification (IPC) or to both national classification and IPC

B. FIELDS SEARCHED

Minimum documentation searched (classification system followed by classification symbols)
Int.Cl. H01M10/0585, H01M4/38, H01M4/48, H01M10/052, H01M10/0569

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2017-531285 A (SOLVAY (SOCIETE ANONYME)) 19 October 2017 & US 2017/0250445 A1 & WO 2016/025589 A1 | 1-4 |
| A | WO 2017/047020 A1 (PANASONIC IP MANAGEMENT CO., LTD.) 23 March 2017 & US 2018/0090790 A1 | 1-4 |

☒  Further documents are listed in the continuation of Box C.    ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 January 2019 (21.01.2019) | 29 January 2019 (29.01.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/042202 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2016/084288 A1 (SANYO ELECTRIC CO., LTD.) 02 June 2016 & US 2017/0324117 A1 | 1-4 |
| A | JP 2014-523101 A (LG CHEM, LTD.) 08 September 2014 & US 2013/0252113 A1 & WO 2013/012248 A2 & EP 2736112 A2 | 1-4 |
| A | JP 2014-67490 A (SANYO ELECTRIC CO., LTD.) 17 April 2014 (Family: none) | 1-4 |
| A | WO 2008/102638 A1 (SANYO ELECTRIC CO., LTD.) 28 August 2008 & US 2010/0081062 A1 | 1-4 |
| A | JP 2008-41366 A (SONY CORP.) 21 February 2008 (Family: none) | 1-4 |
| A | JP 2015-50280 A (ASAHI KASEI CORPORATION) 16 March 2015 (Family: none) | 1-4 |
| A | WO 2014/050114 A1 (SANYO ELECTRIC CO., LTD.) 03 April 2014 & US 2015/0263334 A1 | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013218967 A
- JP 2008041366 A
- JP 2017530500 W